(19) **Europäisches Patentamt**

**European Patent Office**

**Office européen des brevets**

(11) Publication number: **0 356 067**
**A2**

(12) # EUROPEAN PATENT APPLICATION

(21) Application number: **89308093.7**

(51) Int. Cl.4: **G01G 19/02 , G01G 9/00**

(22) Date of filing: **09.08.89**

(30) Priority: **23.08.88 GB 8819937**

(43) Date of publication of application:
**28.02.90 Bulletin 90/09**

(84) Designated Contracting States:
**AT BE CH DE ES FR GB GR IT LI LU NL SE**

(71) Applicant: **Kirby, John**
**364a Manchester Old Road**
**Middleton Manchester M24 4EB(GB)**

(72) Inventor: **Kirby, John**
**364a Manchester Old Road**
**Middleton Manchester M24 4EB(GB)**

(74) Representative: **McNeight, David Leslie et al**
**McNeight & Lawrence Regent House Heaton**
**Lane**
**Stockport Cheshire SK4 1BS(GB)**

(54) **Weighing vehicles.**

(57) A vehicle can be weighed, without resort to a weighbridge, by measuring the acceleration (or deceleration) of the vehicle and the force causing such acceleration and evaluating the weight from such measurement.

EP 0 356 067 A2

## WEIGHING VEHICLES

This invention relates to weighing vehicles.

Vehicles are conventionally weighed on weighbridges. These are large, expensive and complicated pieces of machinery and are essentially fixedly located.

Enacted and threatened legislation regarding total weight of vehicles and prescribing substantial fines for overweight condition has given rise to numerous suggestions for portable, less complicated, less bulky and less expensive forms of weighbridge. In such, for example, vehicular wheel or axle weights are measured and summed to find the total weight. The idea is for the vehicle operator, not having access to a weighbridge, to be able to check that the vehicle is not overloaded and that it is within the law.

However, these suggestions of individual wheel or axle weight measurements involve time consuming operations involving placing the vehicle on the equipment one wheel or axle at a time. Such operations bring in their own inaccuracies as well.

The present invention provides a method of and apparatus for weighing vehicles (particularly, but by no means exclusively, of road transport vehicles) which takes little time and which is always available when required.

The invention comprises a method for weighing a vehicle, comprising measuring the acceleration of the vehicle and the force causing such acceleration, and evaluating the weight from such measurement.

Let it be said at the outset that "weight" is referred to in the specification, though it is recognised that strictly speaking the term "mass" would be more scientifically apt, for the reason that it is weight which is commonly spoken of.

The accelerating force may be measured by measuring deformation or displacement of a drive train member, for example by measuring twisting of a propeller shaft. Such twisting may be measured by measuring a time delay between peripheral marks at axially spaced positions on said shaft passing fixed sensors. Such marks may be magnetic marks, the sensors being adapted to detect same. The magnetic marks may, for example, comprise ferromagnetic attachments to the shaft, the sensors being for example coils. For example, discs like magnetic storage discs for computers can be attached for rotation with the shaft at opposite ends thereof and read heads as in computers can be located adjacent the same to read magnetic signals recorded on the discs.

Other sensing arrangements could be used, for instance, optical encoders mounted on the shaft at opposite ends thereof, sensed by photocells.

The time delay will clearly have to be related to the speed of rotation of the shaft in order to measure the twisting absolutely. The rotational speed can of course be derived from the signals picked up by either of the sensors each time a magnetic (or optical or other) mark passes it.

The acceleration can be measured by measuring the time taken to accelerate at a constant rate between two given speeds. Thus, for example, a "test" run might be arranged immediately after loading-up a vehicle in which the driver selects a stretch of open, clear, level road and accelerates steadily between say five and fifteen miles per hour (8 and 24 kilometres per hour) manually flicking a switch on at the 5 mph mark and off at the 15 mph mark. Or, preferably, speed sensing means could be arranged to do that automatically.

Acceleration information can also, of course, be gleaned from a shaft magnetic or optical encoder which can be part of the means for measuring shaft twisting.

The need for maintaining a steady acceleration during the measurement period can also be avoided by taking continuous measurement of acceleration and performing a more complicated mathematical operation, possibly integrating or averaging the acceleration over the measurement period (which may be, of course, over a set time period or distance rather than over a set speed interval).

Acceleration could, otherwise, be measured by an inertial instrument for example one involving a spinning gyroscope or a ring laser gyroscope, or a simple deflecting beam.

The weight of the vehicle will of course be equal to a function of the shaft twisting and the measured acceleration and will involve a constant factor which depends upon the characteristics of the vehicle and its component parts such as the propeller shaft. Such a constant factor is probably best determined by calibration in which the vehicle is taken through two or more measuring operations when loaded to different, known (e.g. weighbridge-determined) gross weights.

Acceleration, in its broadest sense, includes deceleration, of course, and such is also possible in the present instance. Instead of relying on acceleration by the engine to make the measurement, the vehicle can be decelerated by its regular or by special brake means and an effect on the same by the braking force also measured.

Such a special brake means can comprise a regenerative brake, and the braking force thereof can be measured by measuring the power generated by the braking. A friction brake arrangement can of course have strain gauge or other attachments measuring the elastic displacement of a brake shoe under the braking load.

Possibly, for greatest standardisation enabling mass production and standardised fitting of equipment for carrying out the method, a special brake member which can be used independently of other retarding means of the vehicle might be produced which is easily fitted and even retrofitted to many, if not all, types of vehicle and which has within it or associated with it all necessary sensors and computers to carry out the method completely automatically or substantially so.

Embodiments of apparatus and methods for weighing vehicles according to the invention will now be described with reference to the accompanying drawings, in which :-

Figure 1 is a view of a propeller shaft of a road vehicle when not transmitting torque, showing magnetic sensing means;

Figure 2 is a like view of the shaft of Figure 1 when transmitting torque;

Figure 3 is an axial view of a shaft-mounted optical encoder;

Figure 4 is a diagrammatic illustration of an automatic system for carrying out the method;

Figure 5 is a diagrammatic illustration of another system for carrying out the method;

Figure 6 is a diagrammatic illustration of a braking arrangement measuring retarding force; and

Figure 7 is a diagrammatic illustration of another such braking arrangement.

The drawings illustrate methods and apparatus for weighing vehicles by measuring the acceleration of the vehicle and the force causing such acceleration and evaluating the weight from such measurements.

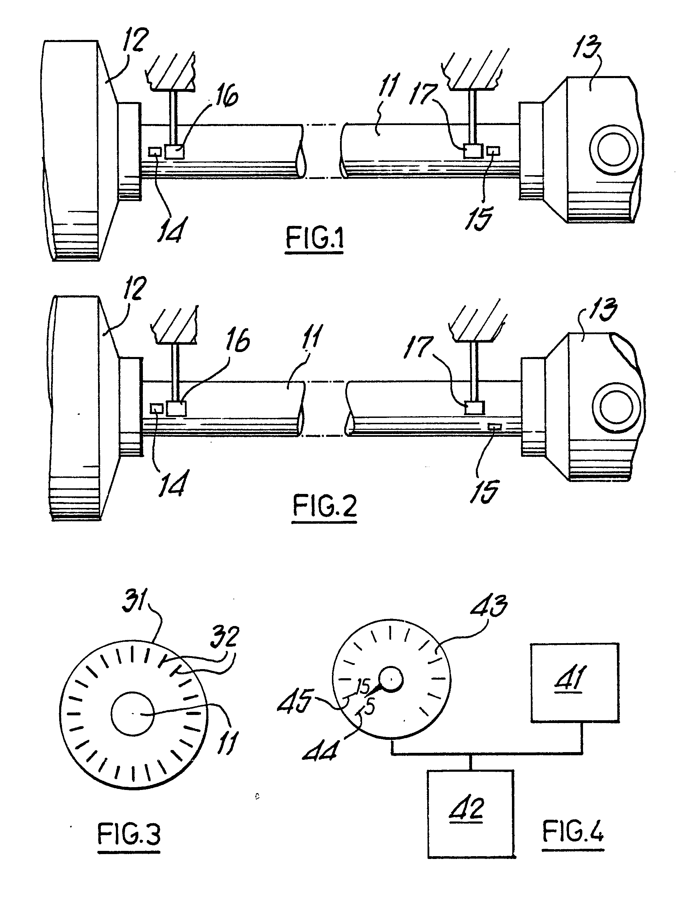

Figures 1 and 2 illustrate measuring the accelerating force by measuring deformation of a drive train member namely the propeller shaft 11 of a road vehicle. When the shaft 11 transmits driving power from the gearbox 12 to the axle 13 it twists under the transmitted torque. The extent of twisting is reasonably linear with respect to the torque.

Magnetic markers 14,15 are mounted on the shaft 11 at opposite ends thereof. It is convenient to regard them as being aligned (though it is not essential that they are) when the shaft 11 is in its normal, i.e. untwisted condition. Fixed, aligned sensors 16,17 are mounted adjacent the locations of the magnetic markers 14,15 to sense when they pass as the shaft 11 rotates. The aligned markers and sensors will give rise to simultaneous output signals from the sensors 16,17 so long as the shaft 11 is not loaded. Once power is transmitted, however, the shaft 11 will twist proportionally to the torque and hence the accelerating force.

Certain assumptions are implicit in this, of course, namely that there is no slip in the system or between the road wheels and the road, and that the vehicle speed is low enough for air resistance and friction to be ignored.

The twisting will delay the signal from sensor 17 as compared to that from sensor 16 by a time interval proportional to the twisting, and hence proportional to the accelerating force.

The delay will also be inversely proportional to the shaft rotational speed. A measure of that speed of course can be obtained from the frequency of pulses from one of the sensors 16,17. It may be desired to have more information than is derived from a single marker on the periphery of the shaft. Figure 3 illustrates an optical encoder 31 mounted on the shaft 11, two of which can be used in place of the single markers 14,15 of Figures 1 and 2, having a multiplicity of windows 32 giving rise to a train of pulses every revolution. Figure 3 might as well illustrate a magnetic encoder in which the windows 31 are magnetic "marks" on a magnetic disc like a magnetic data store for a computer. The optical read head 33 would then be a magnetic read head.

Figure 4 illustrates one arrangement in which the force measure derived from such sensors as are described with reference to Figures 1 to 3 is used to evaluate vehicle gross weight.

The force measure is input from the sensor arrangement 41 to a computer 42 together with a time signal from a speedometer arrangement 43 which gives pulses as the needle passes, say, the 5 mph (8 kph) and 15 mph (24 kph) marks 44,45. It is assumed here that a measurement will depend upon the vehicle being driven with constant acceleration between those two speeds, and on level ground.

The force measure will be in the form of a time interval which will be proportional to force and can be represented as $k_1 f$ where $k_1$ is a constant and $f$ is the force. The acceleration measure will be in the form of a time interval which will be inversely proportional to the acceleration and can be represented as $k_2 a$ where $k_2$ is another constant and $a$ is the acceleration. The vehicle weight $W = f/a$ (neglecting the gravitational constant). The computer output will be $k_1 f/k_2 a$ or $k_3 f/a$ where $k_3 = k_1/k_2$. This constant $k_3$ can be eliminated by calibration.

For a particular vehicle, the test can be carried out at a known gross weight, as measured by a weighbridge. The constant $k_3$ can then be evaluated. Alternatively, the vehicle can be run empty for a first measurement and then again with a known added load. The value $k_3$ can then be evaluated without knowing the gross weight.

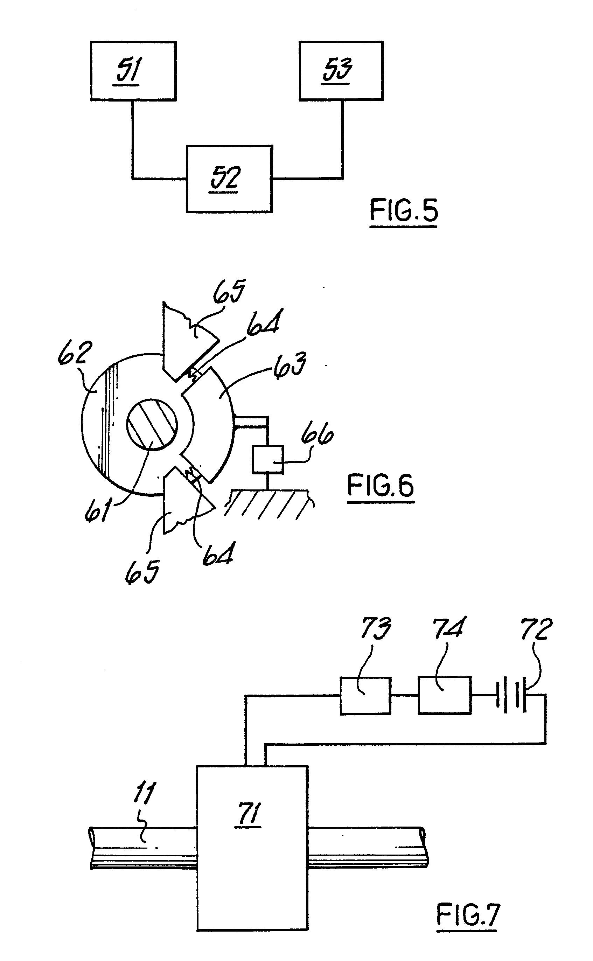

Figure 5 illustrates an arrangement in which the acceleration value is input to the computer 52 from an inertial accelerometer 51 such as a gyroscopic or pendulum arrangement or a ring laser gyroscope. Using such an arrangement instantaneous values of acceleration and force from force measuring arrangement 53 can be used in the computation instead of having to maintain a given acceleration for a period of time.

Instead of relying on positive acceleration brought about by the power unit of the vehicle, it is possible to work off negative acceleration or retardation, as illustrated in Figure 6 and 7.

Figure 6 illustrates a shaft or axle braking mechanism in which the shaft or axle 61 carries a brake disc 62 which is acted on by a brake pad arrangement 63. Inevitably the brake pad arrangement, mounted in fixed structure of the vehicle, is movable under the effect of the braking force. This movability is depicted diagrammatically in this figure as an elastic interconnection 64 between the pad arrangement 63 and the fixed structure 65. A displacement sensor or strain gauge or load cell arrangement 66 is located between the brake pad arrangement 63 and the fixed structure 65.

Figure 7 illustrates another braking arrangement in which a regenerative brake 71 generates a current which is adapted to charge a battery 72 of the vehicle via a control arrangement 73. 74 is a device measuring the charging current from the regenerative brake 71. The charging current will be a measure of the braking effort and hence of the deceleration.

The braking devices of Figure 6 and 7 can be regarded as individual devices providing in either case the sole power required to bring the vehicle to a low speed or even to rest, or they can be regarded as one of several braking elements, e.g. brakes on different ground wheels, with a known division of braking effort.

In any event, the measures detailed above with reference to the accompanying drawings are essentially capable of variation to suit different circumstances arising in different vehicles. Whilst the invention has been described particularly with regard to road vehicles, it will be understood that it can equally well apply to railway vehicles, ships and aeroplanes.

**Claims**

1. A method for weighing a vehicle, characterised by comprising measuring the acceleration of the vehicle and the force causing such acceleration and evaluating the weight from said measurement.

2. A method according to claim 1, characterised in that the accelerating force is measured by measuring deformation or displacement of a drive train member.

3. A method according to claim 2, characterised in that the accelerating force is measured by measuring twisting of a propeller shaft.

4. A method according to claim 3, characterised in that said twisting is measured by measuring a time delay between peripheral marks at axially spaced positions on said shaft passing fixed sensors.

5. A method according to claim 4, characterised in that the marks comprise magnetic marks and the sensors being adapted to detect same.

6. A method according to any one of claims 1 to 5, characterised in that the acceleration is measured by measuring the time taken to accelerate at constant rate of acceleration between two given speeds.

7. A method according to claim 6, characterised in that the said time is measured automatically by a timer being started as the vehicle passes the lower of said speeds and stopped as the vehicle passes the higher of said speeds.

8. A method according to any one of claims 1 to 5, characterised in that the acceleration is measured by an inertial instrument.

9. Apparatus for weighing a vehicle characterised by comprising vehicle acceleration measuring means, force measuring means measuring the force producing the vehicle acceleration, and evaluating means evaluating the weight of the vehicle from the measured acceleration and force.

10. Apparatus according to claim 9, characterised in that said force measuring means comprise vehicle drive train member deformation or displacement measuring means.

11. Apparatus according to claim 10, characterised in that said force measuring means comprises axially-spaced marks on a propellor shaft which alter their relative circumfer- ential positions and sensors determining a time delay between the markers passing circumferential positions occasioned by twisting of the propellor shaft under the accelerating force.

12. Apparatus according to claim 11, said marks being magnetic marks.

13. Apparatus according to claim 11, said marks being optical marks.

14. Apparatus according to any one of claims 9 to 13, in which said vehicle acceleration measuring means comprise a speedometer arrangement and a timer associated with such arrangement and arranged to measure a time interval over which the speedometer registers a given speed change.

15. Apparatus according to any one of claims 9 to 13, in which said vehicle acceleration means comprise an inertial accelerometer.

16. Apparatus according to any one of claims 9 to 15, in which the force producing the vehicle acceleration is a braking force (and so the acceleration is negative) produced by a braking arrangement.

17. Apparatus according to claim 16, including a brake pad arrangement mounted in fixed structure of the vehicle and movable under the effect of the braking force, such movement being indicative of the force.

FIG.1

FIG.2

FIG.3

FIG.4

FIG.5

FIG.6

FIG.7